Europäisches Patentamt

European Patent Office

Office européen des brevets

(19)

(11) EP 0 825 543 A2

(12) **EUROPÄISCHE PATENTANMELDUNG**

(43) Veröffentlichungstag:
25.02.1998 Patentblatt 1998/09

(51) Int. Cl.⁶: G06F 17/40

(21) Anmeldenummer: 97114225.2

(22) Anmeldetag: 18.08.1997

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 21.08.1996 DE 19633693

(71) Anmelder:
Max-Planck-Gesellschaft zur Förderung
der Wissenschaften e.V.
80539 München (DE)

(72) Erfinder:
• Morfill, Gregor, Prof.-Dr.
81927 München (DE)
• Räth, Christoph
85386 Eching (DE)

(74) Vertreter: Hertz, Oliver
v. Bezold & Partner,
Brienner Strasse 52
80333 München (DE)

(54) **Verfahren und Vorrichtung zur Mustererfassung**

(57) Bei einem Verfahren zur Erfassung von Targetmustern in einer Textur, mit der ein Systemzustand als Verteilung von Punkten in einem n-dimensionalen Raum darstellbar ist, werden anisotrope Skalierungsfaktoren $a_{ji}$ bestimmt, die charakteristisch für die Abhängigkeit der Projektion der Punktdichte auf die j-te Koordinate vom Abstand zu einem betrachteten Punkt $p_i$ ist. Ein Targetmuster wird erfaßt, falls die Verteilung der Skalierungsfaktoren von vorbestimmten Vergleichsverteilungen von targetmusterfreien Systemen abweicht.

EP 0 825 543 A2

**Beschreibung**

Die vorliegende Erfindung betrifft ein Verfahren und eine Vorrichtung zur Mustererfassung in statischen oder dynamischen Systemen.

Die untersuchten Systeme umfassen im weitesten Sinne alle physikalischen, chemischen oder biologisch-medizinischen Vorgänge oder Materialien, deren Zustand oder Einzelmerkmale mit einem Satz von n Parametern charakterisierbar sind. Die Systeme können im Untersuchungszeitraum unveränderlich (statisch) oder zeitlich veränderlich (dynamisch) sein. Im letzteren Fall ist die Zeit einer der n Parameter.

Die charakterisierenden Parameter werden entweder durch systemimmanente oder durch von außen induzierte physikalische oder technische Merkmale gebildet. Sie können insbesondere geometrische Anordnungen, zeitliche Anordnungen oder Amplitudenverläufe bestimmter physikalischer oder technischer Größen umfassen.

Es sind verschiedene Verfahren zur Erkennung von Strukturen (Mustern) in n-dimensionalen Räumen bekannt. Hierzu zählen z.B. lokale Suchverfahren für Dichteschwankungen, die sogenannte "Maximum-Entropie-Methode" sowie die sogenannte "Maximum-Likelihood-Methode". Diese bekannten Verfahren erfordern jedoch Annahmen oder Vorabinformationen, um Strukturen identifizieren zu können. Weitere Nachteile der bekannten Verfahren sind, daß eine Erweiterung auf mehr als zwei Dimensionen sehr rechenaufwendig ist, daß uneinheitliche Meßgrößen und viele unterschiedliche Korrelationen nicht verarbeitet werden können und daß die Empfindlichkeit bei irregulären Mustern mit starken unkorrelierten Störungen gering ist.

Ferner ist aus der Publikation von H. Atmanspacher et al. (PHYSICAL REVIEW A, Bd. 40, Nr. 7, Oktober 1989, USA, Seiten 3954-3963 "Determination of F(alpha) for a Limited Random Point Set (Galaxy Distribution)") ein Verfahren bekannt, bei dem durch Bestimmung des F-Spektrums in einer überwiegend unkorrelierten Punktmenge eventuell vorhandene korrelierte Untermengen identifiziert werden können. Ein weiteres Verfahren ist aus der Publikation von H. Ebeling et al. (PHYSICAL REVIEW E, Bd. 47, Nr. 1, Januar 1993, USA, Seiten 704-710 "Detecting Structure in Two Dimensions Combining Voronoi Tessellation and Percolation") bekannt. Bei diesem Verfahren wird eine Aufteilung des ursprünglichen Datenpunktfeldes in einzelne Zellen vorgenommen und die Verteilung der Zellen mit derjenigen verglichen, die bei einer statistischen Poisson-Verteilung erwartet werden würde.

Eine vereinfachte und zuverlässigere Verfahrensweise zur Erkennung von Strukturen in n-dimensionalen Räumen ist durch das Raumfilterverfahren gemäß DE-OS-43 17 746 bekannt. Dabei wird der Systemzustand durch eine Punktverteilung im Zustandsraum (n Dimensionen) dargestellt. Die Änderung der Punktdichte (Gradient) um einen untersuchten Punkt wird durch einen isotropen Skalierungsfaktor a beschrieben, der ein Maß für die umgebende Punktzahl in Abhängigkeit vom Abstand vom untersuchten Punkt ist. Gemäß dem bekannten Verfahren wird die Differenz der Häufigkeitsverteilung aller a-Werte der untersuchten Punkte und der Häufigkeitsverteilung der a-Werte eines Bezugszustandes zur Erkennung von lokalen Dichteschwankungen verwendet. Dieses bekannte Raumfilterverfahren besitzt die folgenden Nachteile:

Mit dem Verfahren sind Strukturen im Zustandsraum lediglich erkennbar, ohne daß ihre Orientierung klassifizierbar ist. Somit ist auch ein Vergleich mit vorbestimmten gesuchten Strukturen und damit eine Lokalisierung bzw. Signalisierung bestimmter Zustände im Zustandsraum nicht möglich. Dadurch ist das bekannte Verfahren auf Anwendungen insbesondere in der Bildverarbeitung beschränkt. Außerdem kann die Strukturerkennung nach dem bekannten Verfahren in den Fällen ungenau sein, wenn die lokalen Dichteschwankungen über Raumbereiche "verschmiert" sind, die erheblich größer als die bei der Untersuchung eines Punktes berücksichtigte Umgebung sind. Die Messung und Erkennung derartiger unscharfer Ränder von Bildstrukturen ist gegebenenfalls fehlerhaft, so daß eine sich anschließende Signalisierung des Auftretens von Strukturen unzuverlässig sein kann.

Schließlich sind herkömmliche Verfahrensweisen zur Erfassung von Systemzuständen, insbesondere zur Erkennung von fehlerhaften Stukturen in Systemen, bekannt, bei denen zunächst durch ein globales Verfahren das Vorhandensein eines Fehlers erfaßt wird und dieser dann durch lokale Untersuchungen geortet wird. Dies ist wegen des Zeitaufwandes nicht praktikabel. Dies gilt insbesondere bei Anwendungen zur Zustandserfassung einer Vielzahl von Systemen, z.B. in der Massenproduktion.

Die Aufgabe der Erfindung ist es, ein verbessertes Verfahren zur Erfassung von Mustern oder Systemzuständen anzugeben, mit dem die Nachteile bzw. Beschränkungen herkömmlicher Verfahren überwunden werden und das eine Ausdehnung auf breite technische Anwendungen erlaubt. Aufgabe der Erfindung ist es ferner, eine Vorrichtung zur Durchführung des Verfahrens anzugeben.

Diese Aufgabe wird durch die Verfahren bzw. Vorrichtung mit den Merkmalen gemäß den Patentansprüchen 1 oder 6 bzw. 8 gelöst. Vorteilhafte Ausführungsformen der Erfindung ergeben sich aus den abhängigen Ansprüchen.

Die Erfindung basiert auf der Weiterentwicklung des bekannten Raumfilterverfahrens dahingehend, daß neben der Punktdichteänderung in der Umgebung der untersuchten Punkte auch die Richtungsabhängigkeit der Punktdichteänderung in die Zustandserfassung einbezogen wird und daß damit eine umfassendere und genauere Informationsauswertung ermöglicht und die technische Anwendbarkeit auf zahlreiche Systeme erweitert wird.

Die untersuchten Systeme können neben Bildmustern insbesondere Werkstoffe, mechanische Vorrichtungen und biologische Systeme umfassen. Die Bildverarbeitung umfaßt im weitesten Sinne die Verarbeitung von Merkmalsmustern, die herkömmlich in einer zwei- oder höherdimensionalen Abbildung oder die im zeitlichen Verlauf einer Signalamplitude auftreten. Die Erfassung eines Systemzustands umfaßt je nach Anwendungsfall Maßnahmen der Aktorik, der Sensorik, der Analyse und der Registrierung bzw. Signalisierung. Die ggf. erforderliche Aktorik umfaßt Maßnahmen zur Erzeugung von Systemreaktionen, die für charakteristische Zustände repräsentativ sind. Dazu zählt beispielsweise die Anregung mechanischer Schwingungen in einem Untersuchungsgegenstand oder Maßnahmen zur Bildung von evozierten Potentialen bei der Untersuchung neurologischer Systeme. Die Sensorik umfaßt die Detektion aller Systemmerkmale in Bezug auf die interessierenden n Parameter und die Darstellung der Merkmale in einem n-dimensionalen Raum. Diese Darstellung umfaßt beispielsweise eine Speicherung geeigneter n-Tupel, die den Merkmalen zugeordnet sind.

Erfindungsgemäß wird für jeden durch ein n-Tupel gekennzeichneten Punkt im Zustandsraum ein oder mehrere Skalierungsfaktor(en) erfaßt, die jeweils einer der n Dimensionen zugeordnet sind und jeweils aus der Projektion der Punktzahl in der Umgebung eines untersuchten Punktes auf die n-te Koordinatenachse im Zustandsraum hervorgehen. Gemäß einer bevorzugten Ausführungsform werden die Anteile der projizierten Punktezahl in Bezug auf die Koordinatenintervalle unterschieden, die oberhalb bzw. unterhalb zu der jeweils n-ten Koordinate des Untersuchungspunkts benachbart liegen.

Erfindungsgemäß umfaßt eine Vorrichtung zur Realisierung des Verfahrens Mittel zur Messung der Merkmale des Systemzustands und zur Bildung des n-dimensionalen Zustandsraums, Mittel zur Abtastung der ermittelten Punkte im Zustandsraum, Mittel zur Zählung von Punkten in der Umgebung von untersuchten Punkten, Mittel zur Erfassung von Skalierungsfaktoren, Mittel zur statistischen Bearbeitung der Skalierungsfaktoren und Mittel zur Registrierung bzw. Signalisierung vorbestimmter Strukturmerkmale. Die erfindungsgemäße Vorrichtung kann ferner Mittel zur Auslösung eines bestimmten Systemzustands, Mittel zur Erfassung und Speicherung charakteristischer Zeitprofile von Signalverläufen und Mittel zur Festlegung geeigneter Koordinatenintervalle in der Umgebung der untersuchten Punkte umfassen.

Ausführungsformen der Erfindung werden im folgenden unter Bezug auf die beigefügten Figuren erläutert. Es zeigen:

Fig. 1    Beispiele zur Illustration einer homogenen Textur (links) und einer statistischen Textur (rechts) mit den entsprechenden Verteilungsfunktionen des Skalierungsfaktors $a_y$,

Fig. 2    Texturbeispiele gemäß Fig. 1, bei denen jedoch ein Targetmuster in der jeweiligen Feldmitte auftritt,

Fig. 3    Kurvenverläufe des Erwartungswertes und der Standardabweichung der Wahrscheinlichkeitsdichten $P_1$ in Abhängigkeit von der Neigung der Mikromuster gemäß den Fig. 1 und 2,

Fig. 4    einen schematischen Ablauf des erfindungsgemäßen Verfahrens gemäß einer ersten Ausführungsform der Erfindung,

Fig. 5    Wahrscheinlichkeitsdichten $P_2$ für eine homogene Texture mit 5 Targetmustern,

Fig. 6    Wahrscheinlichkeitsdichten gemäß Fig. 5, wobei die Targetmuster jedoch in der Feldmitte gruppiert sind,

Fig. 7    ein Beispiel einer weiteren Textur (a), der erfindungsgemäß erfaßten Targetmuster (b) und der Wahrscheinlichkeitsdichten $P_2$ (c, d),

Fig. 8    ein Beispiel einer realen Textur (a) mit einem Targetmuster (b), den auf einen isotropen Skalierungsfaktor bezogenen Wahrscheinlichkeitsdichten $P_2$ (c, d) und den auf einen zusammengesetzten Skalierungsfaktor bezogenen Wahrscheinlichkeitsdichten $P_2$ (e, f), und

Fig. 9    eine schematische Darstellung der Schritte gemäß einer zweiten Ausführungsform des erfindungsgemäßen Verfahrens.

Im folgenden werden zunächst die erfindungsgemäße Ermittlung von Skalierungsfaktoren und anschließend Anwendungsbeispiele der Erfindung in der Bildverarbeitung beschrieben.

Ausgangspunkt der Bestimmung anisotroper Skalierungsfaktoren ist die von dem oben erwähnten Raumfilterverfahren her bekannte Bestimmung des isotropen Skalierungsfaktors a. Die Bestimmung des Skalierungsfaktors a und der erfindungsgemäßen anisotropen Skalierungsfaktoren $a_{j,i}$ wird im folgenden am Beispiel eines Pixelbildes G (x, y) der Größe N * M beschrieben. Jedem Pixel ist ein Grauwert g (x, y) (g aus [0;255]) zugeordnet. Somit umfaßt jeder Pixel eine Orts- und Grauwert-Information, die in einem drei-dimensionalen Vektor $p_i = (x_i, y_i, g_i)$ zusammengefaßt werden kann. Hierbei ist der Grauwert $g_i$ gegebenenfalls normiert, um einen mit den x- und y-Koordinaten vergleichbaren Betrag zu erhalten.

Zur Bestimmung der Skalierungsfaktoren werden um jeden Punkt ($p_i$) jeweils zwei Würfel verschiedener Größen ($d_1^3$, $d_2^3$, $d_1 < d_2$, $d=d_2-d_1$) konzentrisch angeordnet. Durch die Differenz beider Würfel wird um jeden Punkt ein bestimmter Raum gelegt, in dem dann die zu dem betrachteten Punkt ($p_i$) gehörigen Umgebungspunkte gezählt werden. Die Gesamtzahl der in diesen Raum fallenden Umgebungspunkte wird auch als Gesamtmasse $M_i$ bezeichnet.

Die Größe $d=d_2-d_1$ ist die Breite des konzentrisch um den betrachteten Punkt gelegten Koordinatenintervalls. Die Größen und Lagen von $d_1$ und $d_2$ werden in Abhängigkeit vom konkreten Anwendungsfall geeignet ausgewählt. Dies kann z.B. dadurch erfolgen, daß für jeden Punkt ($p_i$) eine Funktion ermittelt wird, die die Abhängigkeit der Punktezahl in einer Umgebung von ($p_i$) von einer Abmessung der Umgebung darstellt. Als geeignete Parameter $d_1$ und $d_2$ werden dann solche Umgebungsabmessungen (Intervallgrenzen) gewählt, für die die wie folgt ermittelten Skalierungsfaktoren Exponenten von Abstands-Potenzfunktionen ergeben, die die genannte Abstandsfunktion möglichst gut annähern. Alternativ ist es jedoch auch möglich, die Lage und Breite des betrachteten Umgebungsintervalls fallabhängig geeignet auszuwählen, z.B. unter Berücksichtigung einer möglichst einfachen rechnerischen Verarbeitung der betrachteten Punkte oder dgl. Es ist auch möglich, daß das Umgebungsintervall für jede Koordinate gesondert ausgewählt wird. Dies wird insbesondere in solchen Fällen notwendig sein, bei denen der n-dimensionale Raum zur Beschreibung eines Systemzustands neben Raumkoordinaten auch weitere Systemparameter (z.B. Grauwerte, Schwingungsamplituden oder dgl.) als zusätzliche Koordinaten aufweist.

Zur Bestimmung des isotropen Skalierungsfaktors $a_i$ wird die logarithmische Ableitung der Gesamtmasse $M_i$ berechnet (vgl. Gleichungen (1) und (2)).

$$a_i = \frac{\log(M_i(d_2)) - \log(M_i(d_1))}{\log d_2 - \log d_1} \tag{1}$$

mit

$$M_i(d) = \sum_{j=1}^{N \cdot M} \Theta(\frac{d}{2} - \|\vec{p}_i - \vec{p}_j\|_\infty) \tag{2}$$

$\Theta$ ist die Sprungfunktion (Heaviside-Funktion) und der zweite Summand in Gleichung (2) bezeichnet den jeweiligen Abstand des betrachteten Punktes ($p_i$) von jedem anderen Punkt des Pixelbildes. Der isotrope Skalierungsfaktor $a_i$ ist lediglich ein Maß für radiale Gradienten der umgebenden Punktzahlen.

Zur Erfassung der Richtungsabhängigkeit des radialen Gradienten wird nun erfindungsgemäß die Bestimmung anisotroper Skalierungsfaktoren eingeführt. Hierbei erfolgt wiederum eine Zählung der umgebenden Punkte, die in den Raum zwischen den obengenannten Würfeln fallen. Anstelle der Gesamtmasse $M_i$ werden jedoch Projektionen der Gesamtmasse $M_{xi}(d)$ und $M_{yi}(d)$ jeweils auf die x- und y-Richtungen bestimmt. Gemäß einer besonderen Ausführungsform werden die Massenprojektionen jeweils auf eine Koordinatenachse zusätzlich in Anteile unterteilt, die auf die positive bzw. negative Seite des betrachteten Punkts ($p_i$) fallen. So bezeichnen in den folgenden Gleichungen (3) bis (10) $M_{xi}(d)$ und $M_{yi}(d)$ die Projektionen der Gesamtmasse auf die x- und y-Richtungen. Die $M^+_{xi}$ und $M^-_{xi}$ (oder $M^+_{yi}$ und $M^-_{yi}$) bezeichnen die Massenprojektionen auf die positive bzw. negative Seite der x- und y-Richtungen in Bezug auf den Punkt ($p_i$).

$$a_{xi} = \frac{\log(M_{xi}(d_2)) - \log(M_{xi}(d_1))}{\log d_2 - \log d_1} \; \text{sgn}(M^+_{xi} - M^-_{xi}) \tag{3}$$

$$a_{yi} = \frac{\log(M_{yi}(d_2)) - \log(M_{yi}(d_1))}{\log d_2 - \log d_1} \; \text{sgn}(M^+_{yi} - M^-_{yi}) \tag{4}$$

$$M_{xi}(d) = \sum_{j=1}^{N \cdot M} \Theta(\frac{a}{2} - |x_i - x_j|)\Theta(\frac{a_2}{2} - \|\vec{p}_i - \vec{p}_j\|_\infty) \tag{5}$$

$$M_{yi}(d) = \sum_{j=1}^{N \cdot M} \Theta(\frac{d}{2} - |y_i - y_j|)\Theta(\frac{d_2}{2} - \|\vec{p}_i - \vec{p}_j\|_\infty) \tag{6}$$

$$M_{xi}^{+} = \sum_{j=1}^{N \cdot M} \Theta(x_j - x_i)\Theta(\frac{d_2}{2} - \|\vec{p}_i - \vec{p}_j\|_{\infty}) \tag{7}$$

$$M_{xi}^{-} = \sum_{j=1}^{N \cdot M} \Theta(x_i - x_j)\Theta(\frac{d_2}{2} - \|\vec{p}_i - \vec{p}_j\|_{\infty}) \tag{8}$$

$$M_{yi}^{+} = \sum_{j=1}^{N \cdot M} \Theta(y_j - y_i)\Theta(\frac{d_2}{2} - \|\vec{p}_i - \vec{p}_j\|_{\infty}) \tag{9}$$

$$M_{yi}^{-} = \sum_{j=1}^{N \cdot M} \Theta(y_i - y_j)\Theta(\frac{d_2}{2} - \|\vec{p}_i - \vec{p}_j\|_{\infty}). \tag{10}$$

In den Gleichungen (5) bis (10) wird durch den zweiten Heaviside-Faktor jeweils festgelegt, daß lediglich Punkte innerhalb des äußeren Würfels in Betracht gezogen werden. Die Signum-Funktion legt das Vorzeichen der anisotropen Skalierungsfaktoren entsprechend dem Massengradienten in der jeweiligen Richtung fest.

Die oben angegebenen Gleichungen beziehen sich beispielhaft auf das erwähnte Pixelbild. Diese Betrachtungen sind in der folgenden Weise und auf beliebige Punktverteilungen erweiterbar. Die Bestimmung der anisotropen Skalierungsfaktoren ist nicht auf die x- und y-Richtung festgelegt. In Abhängigkeit von dem konkreten Anwendungsfall kann auch ein anderes geeignetes Koordinatensystem ausgewählt werden. Es ist sogar möglich, für jeden Punkt ein lokales Koordinatensystem auszuwählen, das von Punkt zu Punkt verschieden ausgerichtet sein kann. So kann es beispielsweise bei der Erfassung von Bildern von Objekten mit im wesentlichen kreisförmiger Berandung vorgesehen sein, daß das lokale Koordinatensystem für jeden Punkt in bestimmter Weise in Bezug auf eine Tangente der Objektberandung ausgerichtet ist. Beispielsweise kann eine Achse eines rechtwinkligen Koordinatensystems im wesentlichen parallel zu der Tangente gewählt werden. Bei derartigen Bilderfassungen ist es in vorteilhafter Weise möglich, aufgrund der ermittelten Verteilung von Skalierungsfaktoren (s. unten) scharfe und diffuse Berandungen voneinander zu unterscheiden.

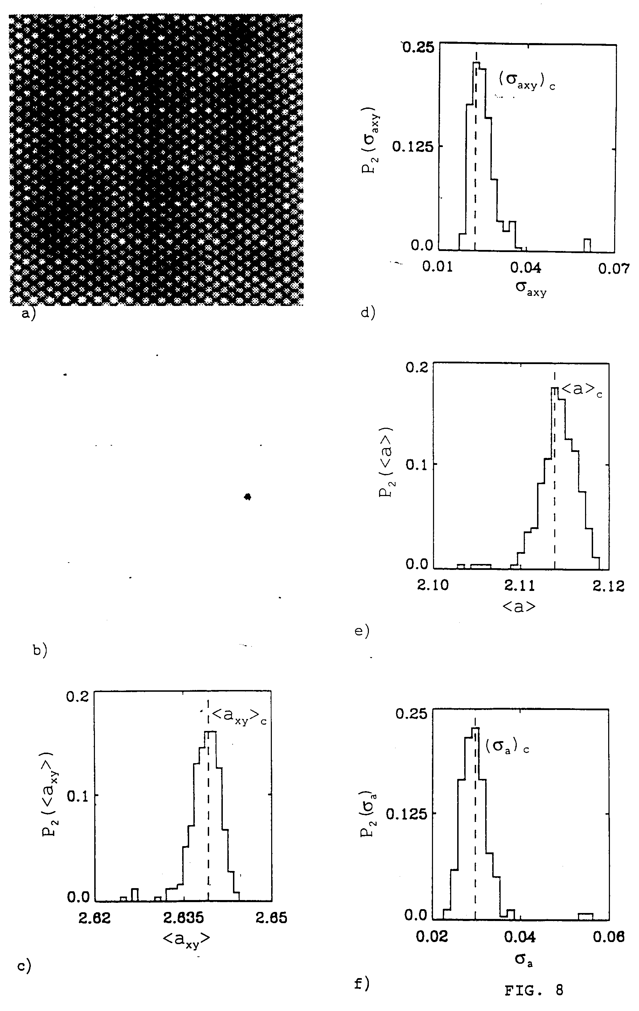

Ferner ist die Einführung eines dritten anisotropen Skalierungsfaktors $a_{g,i}$ möglich. Dieser dritte Skalierungsfaktor $a_{g,i}$ kann analog zu $a_{x,i}$ und $a_{y,i}$ in Bezug auf die Grauwert-Skala (als dritte Koordinate) bestimmt werden. Schließlich können auch komplexe Skalierungsfaktoren aus der Vielzahl von Skalierungsfaktoren gebildet werden, die sich jeweils auf einzelne Koordinatenachsen beziehen. Ein Beispiel für einen derartigen zusammengesetzten Skalierungsfaktor wird unter Bezug auf Fig. 8e, f beschrieben.

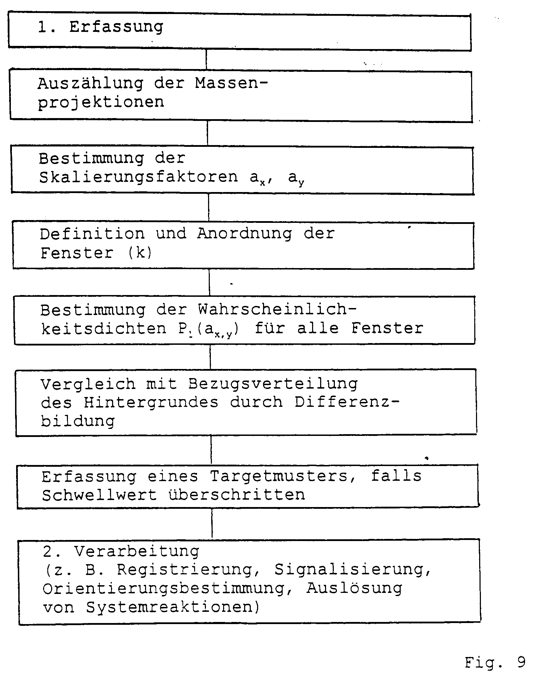

Die angegebene Verfahrensweise gibt für jeden Punkt des untersuchten Systems einen Satz von anisotropen Skalierungsfaktoren. Jeder Satz kann maximal n anisotrope Skalierungsfaktoren umfassen, falls n die Zahl der Parameter zur Beschreibung des Systems ist. Wieviele und welche der anisotropen Skalierungsfaktoren tatsächlich bestimmt werden, hängt von dem konkreten Anwendungsfall ab. Neben den anisotropen Skalierungsfaktoren kann jedem Punkt zusätzlich der oben beschriebene isotrope Skalierungsfaktor oder ein zusammengesetzter Skalierungsfaktor (vgl. Fig. 9) zugeordnet werden.

Im weiteren Verfahren zur Erfassung des Zustands eines Systems wird die Menge aller betrachteten Skalierungsfaktoren ausgewertet. Es werden Häufigkeitsverteilungen bzw. Wahrscheinlichkeitsdichten der Skalierungsfaktoren erfaßt. So läßt sich beispielsweise die Wahrscheinlichkeitsdichte $P_1$ für das Auftreten bestimmter Werte von Skalierungsfaktoren gemäß Gleichung (11) darstellen.

$$P_1(a, d_1, d_2)da = Prob(a_i(d_1, d_2) \in [a, a + da[) \; a_i(d_1, d_2) \in \{a_i, a_{xi}, a_{yi}\} \tag{11}$$

Die Häufigkeitsverteilung oder Wahrscheinlichkeitsdichte ist dabei jeweils auf die Gesamtheit der betrachteten Punkte des Systems oder eine Untermenge dieser Gesamtheit bezogen. Die Erfassung des Systemszustands erfolgt anschließend nach einem Vergleich der Häufigkeitsverteilung(en) mit Bezugsverteilungen, indem vorbestimmte Abweichungen registriert und/oder signalisiert werden. Dabei können die Bezugsverteilungen auf ein Bezugssystem oder auf Häufigkeitsverteilungen des betrachteten Systems bezogen sein, die sich jeweils auf eine andere Untermenge der Gesamtpunktmenge beziehen. Welche Maßnahmen zur Auswertung (Vergleich, Registrierung und/oder Signalisierung) getroffen werden, hängt von den konkreten Anwendungsbeispielen ab. Im folgenden werden Anwendungen des erfindungsgemäßen Verfahrens in der Bildverarbeitung beispielhaft beschrieben.

Gemäß einem ersten Ausführungsbeispiel wird das erfindungsgemäße Verfahren angewendet, um in einem Bild, das durch eine Vielzahl von gleichen Mikromustern gebildet wird, die Orientierung der Mikromuster zu erfassen. Die Gesamtheit der Mikromuster bildet eine Textur. Im Falle einer homogenen Textur sind sämtliche Mikromuster gleich orientiert. Im Falle einer statistischen Textur treten Orientierungsunterschiede zwischen den einzelnen Mikromustern auf. Ein Systemzustand (insbesondere ein Raum- oder Zeitbild) ist durch eine vorbestimmte homogene oder statistisch angeordnete Textur bestimmt. Änderungen des Systemzustands können nun durch die Ermittlung der Abweichungen von der vorbestimmten Textur und deren Ortung registriert und gegebenenfalls signalisiert (oder angezeigt) werden.

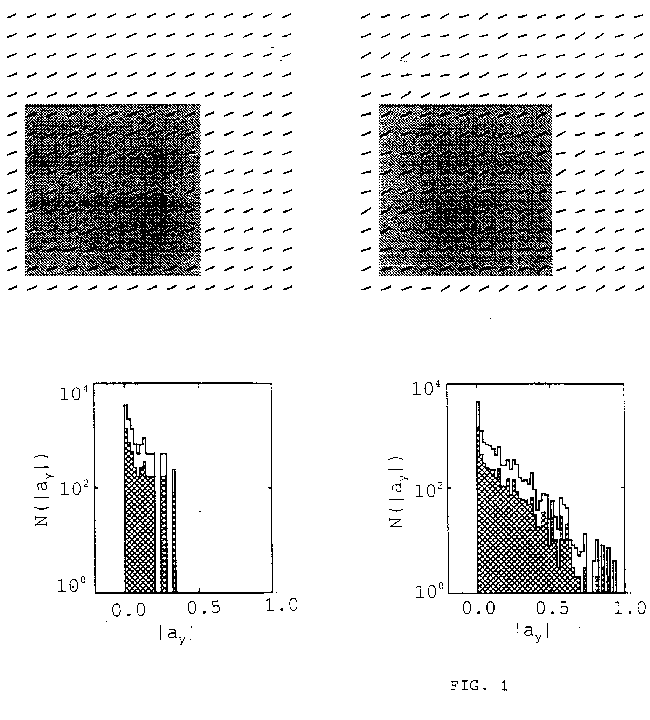

Dieses Anwendungsbeispiel wird unter Bezug auf die Figuren 1-8 beschrieben. Die Erfindung ist jedoch nicht auf die dargestellten Mikrometer beschränkt.

Fig. 1 zeigt Beispiele einer homogenen Textur (links) und einer statistischen Textur (rechts). Jedes Gesamtbild der Größe $N * N$ ($N = 510$) enthält m Mikromuster ($m = 225$), die jeweils durch eine $n * n$-Matrix ($n = 17$) repräsentiert werden. Diese Mikromuster sind gitterartig mit einem Mitte-zu-Mitte-Abstand $2n$ angeordnet. In jedem Mikromuster befindet sich ein Strichsegment. Die Neigung der Strichsegmente beträgt 22,5° gegenüber der x-Achse. Im statistischen Fall tritt eine Streuung von ± 10° auf.

Für jeden der $N * N$-Punkte werden die anisotropen Skalierungsfaktoren bestimmt. Dabei wird die Dimension $d_2$ der größeren Einheit (oben angegebene "Würfel") vorzugsweise kleiner als der Abstand $2n$ zwischen den Mikromustern gewählt, um mit den anisotropen Skalierungsindizes lediglich lokale Eigenschaften zu erfassen. Bei den Berechnungen zu den Beispielen wurde $d_2 = 19$ gewählt. Bei der Ermittlung der Massenprojektionen werden die schwarzen Pixel innerhalb eines Mikromusters, die die Strichsegmente bilden, gezählt. Im Beispielfall der Strichsegmente sind die Mikromuster punktsymmetrisch, so daß die Häufigkeitsverteilungen der anisotropen Skalierungsfaktoren $a_x$ und $a_y$ symmetrisch zu Null sind. Allerdings wird die Orientierung der Strichsegmente durch die Absolutwerte von $a_x$ und $a_y$ erfaßt, die in den jeweils unteren Teilen der Fig. 1 gezeigt sind.

Fig. 1 zeigt, daß der Skalierungsfaktor $a_y$ im homogenen Fall eine relativ enge und im statistischen Fall eine relativ breite Verteilung aufweist. Außerdem ist zu erkennen, daß für einen Unterbereich (schraffiert) die Häufigkeitsverteilung des Skalierungsfaktors im homogenen Fall im wesentlichen gleich bleibt, im statistischen Fall dagegen Veränderungen aufweist.

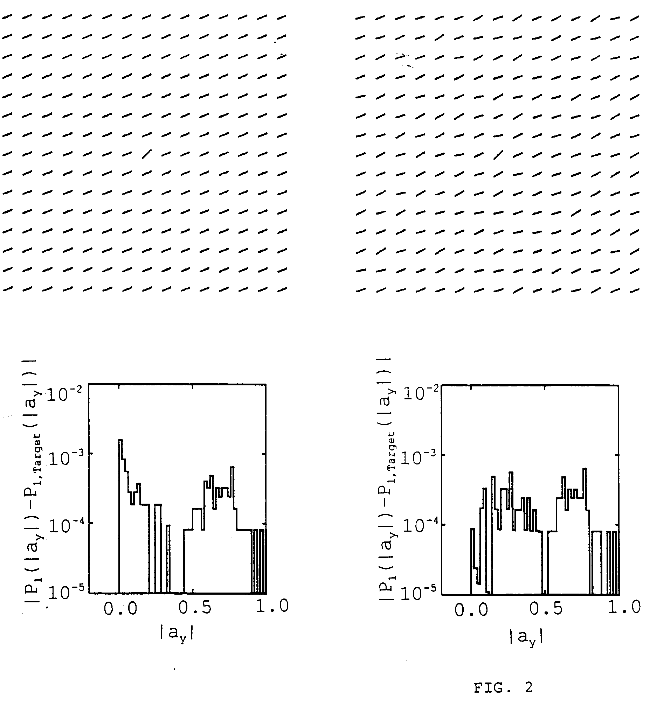

Fig. 2 zeigt eine der Fig. 1 entsprechende Darstellung mit dem Unterschied, daß ein Mikromuster mit veränderter Orientierung (Neigungswinkel 45°) eingefügt ist. Es ist erkennbar, daß durch das abweichende Mikromuster eine Abweichung der Verteilung der Skalierungsfaktoren entsteht. Sowohl bei der homogenen als auch bei der statistischen Textur weisen die Häufigkeitsverteilungen Doppelmaxima auf, wobei jedoch im statistischen Fall die Breite der beiden Maxima vergrößert ist.

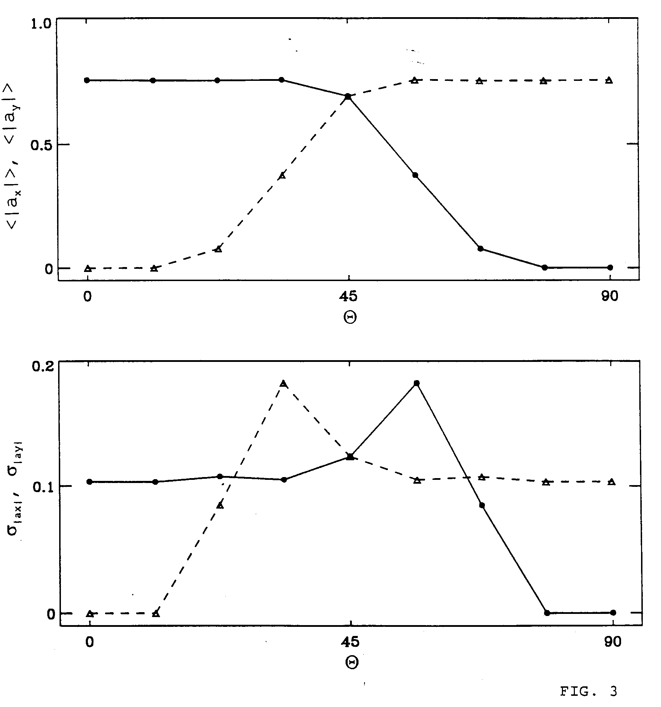

Es wurde festgestellt, daß die erfindungsgemäß ermittelte Wahrscheinlichkeitsdichte $P_1$ der anisotropen Skalierungsfaktoren die in Fig. 3 gezeigten Eigenschaften aufweist. Berechnungen haben ergeben, daß der Mittelwert und die Standardabweichung der Wahrscheinlichkeitsdichte von dem Neigungswinkel der Strichsegmente gegenüber der x-Achse abhängig sind. In Fig. 3 ist für den Fall der homogenen Textur die Abhängigkeit des Mittelwertes (oben) und der Standardabweichung (unten) von dem Neigungswinkel $\phi$ gezeigt. Die durchgezogene bzw. die gestrichelte Kurve bezieht sich jeweils auf die Eigenschaften von $a_x$ bzw. $a_y$. Im Gegensatz zu dem monotonen Verhalten des Mittelwertes zeigt die Standardabweichung Extrema bei Neigungswinkeln von rund 60 bzw. 30°. Bei diesem Neigungswinkel fällt die Projektion des Strichsegments auf die x-Richtung vollständig innerhalb die innere Dimension $d_1$ in Bezug auf einen Punkt in der Mitte des Segments. Dies bedeutet einen maximalen Gradienten der Gesamtmassen zwischen dem inneren und dem äußeren "Würfel". Wenn der Neigungswinkel steigt, liegt auch die Massenprojektion für Pixel am Ende des Strichsegments innerhalb der Dimension $d_1$.

Falls die Textur durch ein Rauschen überlagert ist, so wird dadurch der Mittelwert nicht entscheidend verändert, jedoch wird die Standardabweichung mit einer sich vergrößernden Streuung $\Delta \phi$ in den Neigungswinkeln der Mikromuster vergrößert.

Ausgehend von den in Bezug auf die Figuren 1 bis 3 erläuterten Erkenntnissen wird im folgenden ein erfindungsgemäßes Verfahren zur Erfassung und Lokalisierung von Texturgradienten angegeben. Dieses Verfahren wird weiter in Bezug auf das Beispiel der Strichsegmente erläutert. Da für diese der Mittelwert und die Standardabweichung für die Skalierungsfaktoren $a_x$ und $a_y$ in Bezug auf einen Neigungswinkel von 45° punktsymmetrisch sind, wird im folgenden lediglich einer der Skalierungsfaktoren $a_x$ oder $a_y$ betrachtet, je nachdem, ob die Neigung kleiner oder größer als 45° ist. Zur Vereinfachung wird daher der Index "x" oder "y" weggelassen, falls er nicht zur Unterscheidung notwendig ist. Die Verfahrensweise läßt sich auf beliebige Texturen in der Verarbeitung von Raum- oder Zeit-Bildern ausdehnen.

Ein untersuchtes System besitzt eine Textur, die entweder homogenen oder statistisch orientierte Strichsegmente aufweist. Verschiedene Systemzustände besitzen verschiedene Texturen, die sich in Bezug auf den Neigungswinkel unterscheiden. Ein Target ist eine Struktur (oder ein Musterbereich), in dem gegenüber einer Vergleichstextur eine Änderung des Neigungswinkels aufgetreten ist. Das Erfassungsverfahren geht von der Annahme aus, daß jedes Target eine signifikante Abweichung von der Wahrscheinlichkeitsdichte $P_1$ der übrigen Textur bildet. In diesem Zusammenhang bedeutet der Ausdruck "typisch", daß die jeweilige Wahrscheinlichkeitsdichte für die meisten Teile des Systems repräsentativ ist. Diese Teile werden auch als "Hintergrundtextur" bezeichnet.

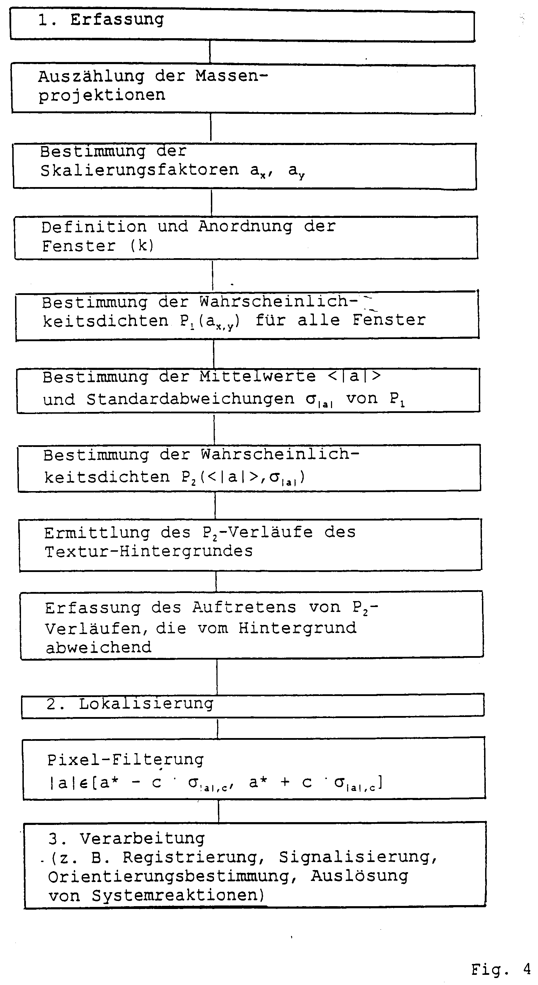

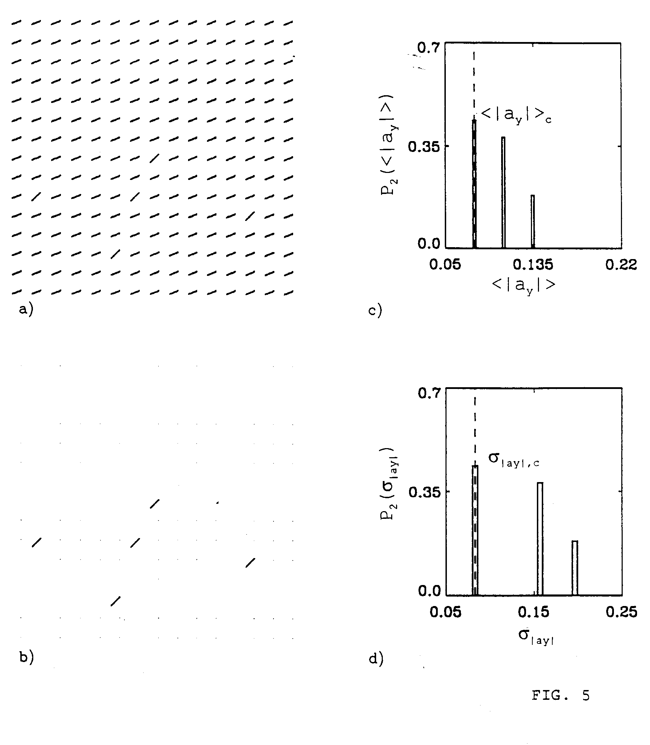

Die erfindungsgemäße Verfahrensweise zur Erfassung und Lokalisierung von Texturgradienten bzw. Targets wird unter Bezug auf die allgemeine Übersicht in Fig. 4 und die Illustration von Einzelheiten in den Fig. 5 bis 8 beschrieben.

Zunächst werden nach der Messung des einen Systemzustand beschreibenden Bildes die oben erläuterten Massenprojektionen ausgezählt und daraus die anisotropen Skalierungsfaktoren berechnet. Anschließend werden Fenster der Größe k * k Pixel definiert und eine Vielzahl derartiger Fenster mit einem vorbestimmten Abstand periodisch auf dem Bild plaziert. Im Fall der oben in Bezug auf die Figuren 1 und 2 gegebenen Beispielwerte beträgt der Fensterabstand 34 Pixel. Die Vielzahl der Fenster bildet ein "gleitendes Fenster". Die Größe k des Fensters wird je nach den Eigenschaften der Textur derart ausgewählt, daß bei der Textur die statistischen Fluktuationen des Mittelwerts der Skalierungsfaktoren aufgrund der Endlichkeit der betrachteten Probe wesentlich geringer als die Standardabweichung ist. Unter den beispielhaft gegebenen Bedingungen beträgt k=170. Anschließend werden für jedes Fenster die Wahrscheinlichkeitsdichten $P_1$ der Skalierungsfaktoren $a_x$ und $a_y$ berechnet. Für alle Wahrscheinlichkeitsdichten $P_1$ jedes Fensters wird der Mittelwert (oder Erwartungswert) und die Standardabweichung ermittelt. Anschließend werden für diese letztgenannten Werte Wahrscheinlichkeitsdichten $P_2$ gemäß den Gleichungen (12) und (13) ermittelt.

$$P_2(\langle|a|\rangle)d\langle|a|\rangle = Prob(\langle|a|\rangle_i(a_1,a_2) \in [\langle|a|\rangle,\langle|a|\rangle + d\langle|a|\rangle[) \tag{12}$$

$$P_2(\sigma_{|a|})d\sigma_{|a|} = Prob(\sigma_{|a|i}(d_1,d_2) \in [\sigma_{|a|},\sigma_{|a|} + d\sigma_{|a|}[) \tag{13}$$

Dabei ist $\langle|a|\rangle_i(d_1, d_2)$ der Mittelwert von $P_1$ für das i-te Fenster und $\sigma_{|a|i}(d_1, d_2)$ die entsprechende Standardabweichung. Wenn die Größe k, wie oben angegeben, in geeigneter Weise ausgewählt ist, so sind die Wahrscheinlichkeitsdichten $P_1$ für die verschiedenen Fenster etwa dieselben. Daher sind die Mittelwerte und Standardabweichungen der Verteilungen $P_1$ jeweils etwa gleich einzelnen Werten, wie sie in den Gleichungen (14) und (15) angegeben sind.

$$\langle|a|\rangle_i(d_1,d_2) \approx \langle|a|\rangle_c(k) \,\forall i \tag{14}$$

$$\sigma_{|a|i}(d_1,d_2) \approx \sigma_{|a|c}(k) \,\forall i \tag{15}$$

Bei einem gegebenen k-Wert bilden die Wahrscheinlichkeitsdichten $P_2$ jeweils ein einzelnes symmetrisches Maximum bei den Werten $\langle|a|\rangle_c$ und $\sigma_{|a|c}$.

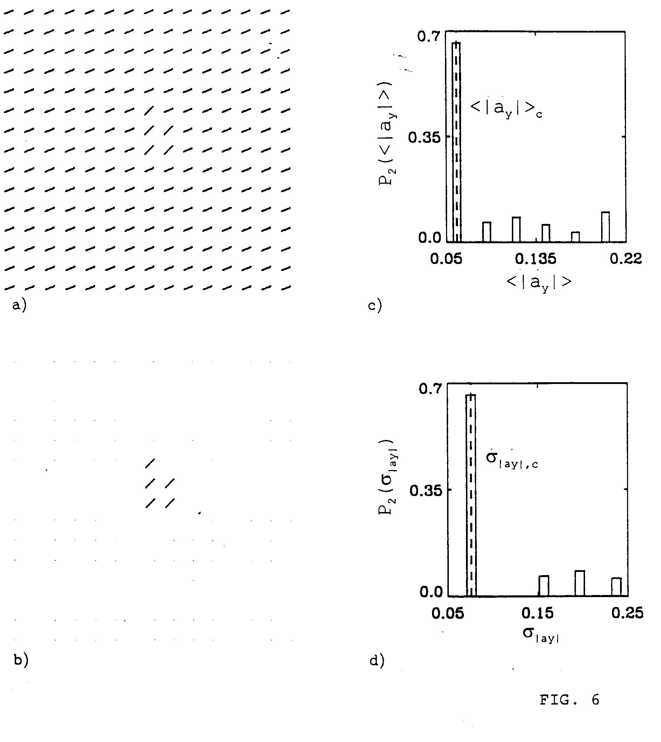

Aufgrund er oben erläuterten zweistufigen Statistik werden sowohl homogene als auch statistische Texturen ohne ein Target in gleicher Weise durch Wahrscheinlichkeitsdichten mit jeweils einem Maximum beschrieben. Falls ein Target auftritt, werden abweichende Verteilungen gefunden. Die Abweichung hängt von der Fenstergröße k und der Mikromusterdichte ab. Die Fenstergröße bestimmt die Häufigkeitsverhältnisse der Fenster, die ein Target enthalten, zu den Fenstern mit reinem Hintergrund. Der Abstand der Maxima der Verteilungen von $P_2$ von dem typischen Hintergrundswert verringert sich bei steigender Fenstergröße. Falls die Fenster zu groß gewählt sind, enthalten sämtliche Fenster mindestens ein Target, so daß das Hintergrundmaximum verschwindet. Die Figuren 5 und 6 zeigen die Wahrscheinlichkeitsdichten $P_2$ ($\langle a_y|\rangle$) und $P_2$ ($\sigma_{|a_y|}$) für eine homogene Textur mit fünf Targets. Dabei besitzen die Hintergrundtextur und die Targets Neigungswinkel von 22,5° bzw. 45°.

Bei einem weiteren Schritt des erfindungsgemäßen Verfahrens werden die Targets lokalisiert. Der Mittelwert und die Standardabweichung gemäß den Hauptmaxima in den Figuren 5 und 6 werden verwendet, um den a-Bereich der Originalverteilung $P_1(a)$ zu definieren, der zu den Hintergrundpixeln gehört. Dieser a-Bereich kann z.B. durch einen Streifen der c-fachen Breite der Standardabweichung gemäß Gleichung (15) um den Mittelwert gemäß Gleichung (14) gebildet werden. Die Konstante c kann beispielsweise 3 betragen. Alle Pixel mit einem a-Wert innerhalb des Streifens werden als dem Hintergrund zugehörig erkannt, während Pixel mit a-Werten außerhalb des Streifens die Targets bilden. Die Ergebnisse dieses Filterverfahrens sind in den Figuren 5b und 6b dargestellt. Es zeigt sich, daß sowohl der Mittelwert als auch die Standardabweichung gemäß den Gleichungen (14) und (15) geeignet sind, als Kriterium zur Erfassung der Targets (und Texturgradienten oder Strukturen) zu dienen. Außerdem zeigt Fig. 6, daß bei Anordnung verschiedener Targets in Gruppen die Erfassung erleichtert wird.

Alternativ ist es möglich, den Filterbereich zur Targetlokalisierung nicht in Bezug auf den obengenannten Mittelwert sondern in Bezug auf einen geeignet gewählten Referenz-Skalierungsfaktor $a^*_{ji}$ zu definieren. So kann beispielsweise der Filterbereich um ein bestimmtes Extremum der $P_1$-Verteilungen gelegt werden.

Schließlich werden die Koordinaten der Pixel, für die ein Target erkannt worden ist, registriert und je nach Anwendung weiterverarbeitet. Diese Weiterverarbeitung kann beispielsweise die Anzeige des erfaßten Targets, eine Signalisierung, die Auslösung einer Systemreaktion oder die Bestimmung der Orientierung des Targets umfassen.

Die letztgenannte Orientierungsbestimmung setzt allerdings voraus, daß die Abhängigkeit der Mittelwerte und Standardabweichungen der a-Werte von den Neigungswinkeln bekannt ist. Diese Abhängigkeit unterscheidet sich bei verschiedenen Mikromustern, die eine andere Form als die oben beispielhaft gezeigten Strichsegmente aufweisen.

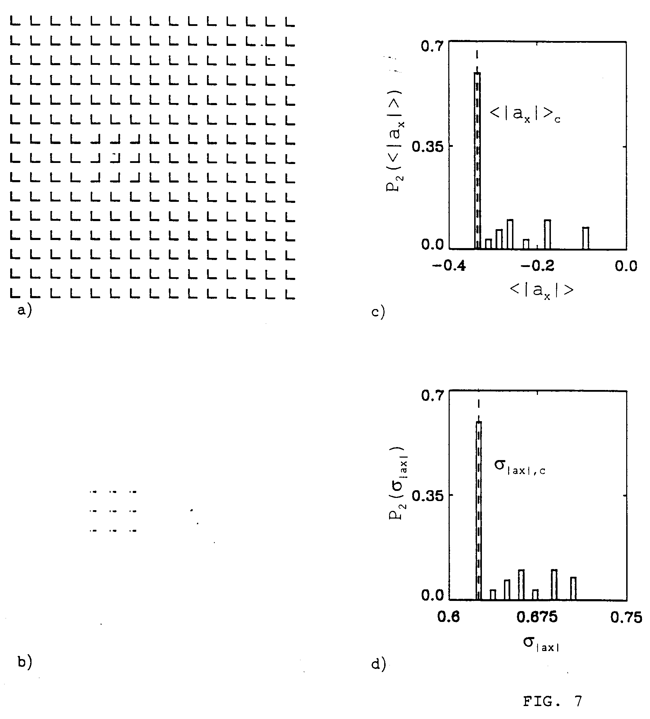

Fig. 7 zeigt die Anwendung der erfindungsgemäßen Verfahrensweise bei einem Mikromuster mit komplexerer Struktur. Gemäß Fig. 7a ist die Hintergrundtextur aus L's zusammengesetzt. Die Targetmikromuster sind entsprechend gespiegelt. Die Häufigkeitsverteilungen der isotropen Skalierungsfaktoren sind für beide Arten von Mikromustern identisch. Allerdings kann die Häufigkeitsverteilung der $a_x$-Werte (Massenprojektionen) die "Entartung" der Mikromuster aufheben, wodurch eine Unterscheidung der Hintergrund- und Target-Mikromuster möglich wird. In diesem Fall genügt es, die erfindungsgemäße Verfahrensweise lediglich unter Verwendung des Skalierungsfaktors $a_x$ durchzuführen. Gemäß den Figuren 7c und 7d weichen die Wahrscheinlichkeitsdichten $P_2$ von Einzelmaximaverteilungen ab, wodurch angezeigt wird, daß Targetmikromuster im Bild vorliegen. Somit kann die Targeterfassung verhältnismäßig leicht durchgeführt werden. Die Unterscheidung (bzw. Lokalisierung) jedoch ist schwieriger als bei dem oben erwähnten Beispiel der Strichsegmente. Wird die oben erwähnte Streifenfilterung beispielsweise mit $c = 2$ durchgeführt, so werden die horizontalen Teile der Target- und Hintergrund-Mikromuster erfaßt. Alternativ werden nur alle Pixel ausgewählt, für die der Skalierungsfaktor $a_x$ oberhalb der Breite des Filterstreifens liegt. Im letzteren Fall können wenigstens Teile der Targetmikromuster ausgefiltert werden (s. Fig. 7b).

Im folgenden wird die erfindungsgemäße Verfahrensweise am Beispiel der Texturen eines realen Objekts unter Bezug auf die Figur 8 erläutert.

Bilder realer Objekte zeigen Intensitätsvariationen (Pixelgrauwerte). Diese Intensitätsvariationen bilden Mikromuster, die wiederum in ihrer Gesamtheit Texturen darstellen. Die lokalen Merkmale der Mikromuster werden durch die Häufigkeitsverteilungen der Skalierungsfaktoren (isotrop und/oder anisotrop) charakterisiert.

Das Testbild gemäß Fig. 8a zeigt eine Textur, die durch Mikromuster gebildet wird, welche aus weißen Punkten bestehen. Die weißen Punkte besitzen sämtlich nahezu dieselben Maximal-Grauwerte und Grauwert-Profile. Die Punkte sind gitterartig periodisch angeordnet. Ein Texturdefekt ist an einer Position gebildet, wo ein Gitterpunkt fehlt. Dieser Texturdefekt wird durch Anwendung der erfindungsgemäßen Verfahrensweise erfaßt und lokalisiert, indem der isotrope Skalierungsfaktor a oder die anisotropen Skalierungsfaktoren $a_x$ und $a_y$ verwendet werden.

Zunächst wird die Häufigkeitsverteilung der isotropen Skalierungsfaktoren a für eine Probe von Fenstern ($k = 60$), die mit einem Abstand von 30 Pixeln auf dem Gitter ($570 * 570$ Pixel) angeordnet sind, berechnet ($d_1=21$, $d_2=61$). Die Figuren 8c und 8d zeigen die entsprechenden Mittelwerte und Standardabweichungen der Wahrscheinlichkeitsdichten $P_2$. Beide Wahrscheinlichkeitsdichten weichen von Einzelmaximumverteilungen ab, womit das Bestehen eines Defekts in der Textur angezeigt wird.

Für bestimmte Fenster zeigt der a-Wert einen besonders niedrigen (hohen) Wert. Diese Fenster enthalten den Texturdefekt. Die Aufgabe der Lokalisierung der Texturdefekte wird durch Auswahl sämtlicher Streifen gemäß der oben angegebenen Filterung durchgeführt, wobei hier der Wert $c = 6$ verwendet wird (s. Figur 8b).

Dasselbe Erfassungs- und Lokalisierungsverfahren wird bei dem Testbild unter Verwendung der Größe

$$a_{xy} = \sqrt{a_x{}^2 + a_y{}^2}$$

durchgeführt (s. Figur 8e, f). Die Wahrscheinlichkeitsdichten $P_2$ der Mittelwerte und der Standardverteilungen der Fenster zeigen dasselbe Verhalten wie im isotropen Fall, wobei jedoch die Fenster mit dem Texturdefekt eine stärkere Abweichung der Mittelwert- und Standardabweichungs-Größen von den Maximalwerten zeigen (s. Figuren 8e und 8f). Die Lokalisierung des Texturdefekts kann so wiederum mit dem Filterungsverfahren durchgeführt werden, wobei hier ein Wert $c = 9$ verwendet wird.

Gemäß einem zweiten Ausführungsbeispiel wird das erfindungsgemäße Verfahren angewendet, um in einem Bild, das durch eine bestimmte Textur (Hintergrundtextur) gebildet wird, das Auftreten von Targetmustern zu erfassen, die sich von der Hintergrundtextur unterscheiden. Die entsprechenden Verfahrensschritte sind in Fig. 9 dargestellt.

Bei dem zweiten Ausführungsbeispiel wird im Unterschied zum ersten Ausführungsbeispiel die Vielzahl der Häufigkeitsverteilungen (oder Wahrscheinlichkeitsdichten) $P_1$ nicht untereinander in Beziehung gesetzt, sondern eine oder mehrere Verteilungen $P_1$ werden mit einer entsprechenden Häufigkeitsverteilung eines Bezugssystems verglichen, das nur die Hintergrundtextur aufweist. Bei diesem Beispiel wird vorzugsweise nur ein Fenster gebildet, das die gesamte Punktverteilung umfaßt. Dieser Vergleich wird z.B. durch die Differenzbildung jeder Häufigkeitsverteilugn $P_1$ mit der Bezugsverteilung gebildet. Falls im Ergebnis der Differenzbildung ein Schwellwert überschritten wird, so wird erkannt, daß ein Targetmuster in der untersuchten Textur vorhanden ist. In einem weiteren Verfahrensschritt wird diese Targetmustererfassung weiterverarbeitet, indem eine Registrierung, Signalisierung und/oder Anzeige erfolgt. Eine Targetlokalisierung kann über eine Erfassung der Fenster erfolgen, bei denen der Schwellwert überschritten wird.

Das erfindungsgemäße Verfahren kann schließlich Schritte umfassen, bei denen Parameter der erfaßten Targetmuster registriert, signalisiert und/oder angezeigt werden.

Eine Vorrichtung zur Durchführung des erfindungsgemäßen Verfahrens enthält Mittel zur Messung des Systemzustands. Diese können beispielsweise optische, akustische oder mechanische Sensoren sein. Die Gesamtheit der von den Sensoren ausgegebenen Signale wird gespeichert und als Punktverteilung im Zustandsraum dargestellt. Die erfindungsgemäße Vorrichtung enthält ferner Mittel zur Abtastung der Punkte im Zustandsraum. Diese Abtastmittel können z.B. durch Mittel zur Zuordnung von Koordinatenwerten zu den einzelnen Punkten gebildet werden. Es sind ferner Zählmittel zur Bestimmung der Punktzahlen M in den Umgebungsbereichen jedes untersuchten Punktes und Kalkulationsmittel zur Berechnung der Skalierungsfaktoren vorgesehen. Die Kalkulationsmittel sind ferner zur statistischen Bearbeitung der Skalierungsfaktoren gemäß den oben erläuterten Ausführungsbeispielen vorgesehen. Schließlich enthält die erfindungsgemäße Vorrichtung Verarbeitungsmittel, mit denen das Auftreten von Targetmustern registriert, signalisiert und/oder angezeigt wird. Die gegebenenfalls vorgesehenen Mittel zur Auslösung bestimmter Systemzustände können durch Mittel zur Zuführung von mechanischer Energie oder von Strahlungsenergie gebildet werden. So kann beispielsweise ein Aktorikmittel vorgesehen sein, das einem Werkstück einmalig oder periodisch mechanische Impulse zuführt, wobei die erfindungsgemäße Verfahrensweise dann zur Erfassung von charakteristischen Mustern im Zeitverlauf von Eigenschaften des angeregten Systems angewendet wird. Ferner ist es möglich, das untersuchte System mit Licht einer geeigneten Wellenlänge anzustrahlen, um eine Abbildung (z.B. der Oberfläche eines Werkstücks oder eines medizinisch/biologischen Objekts) zu erhalten, bei der dann das erfindungsgemäße Verfahren durchgeführt wird.

## Patentansprüche

1. Verfahren zur Erfassung von Targetmustern in einer Textur, mit der ein Systemzustand als Verteilung von Punkten ($p_i$) in einem n-dimensionalen Raum darstellbar ist, umfassend die Schritte:

   a) für jeden Punkt ($p_i$) mit den Koordinaten ($x_{1,i} \cdots x_{n,i}$) wird mindestens eine Punktzahl $M_{ji}(d_2)$, die jeweils alle Punkte umfaßt, deren j-te Koordinate in ein Intervall [$x_{j,i}+d_2, x_{j,i}-d_2$] fallen, und mindestens eine Punktzahl $M_{ji}(d_1)$ ermittelt, deren j-te Koordinate in ein Intervall [$x_{j,i}+d_1, x_{j,i}-d_1$] fallen, wobei $d = d_2-d_1$ die Breite eines vorbestimmten Intervalls jeweils oberhalb und unterhalb der Koordinate ($x_{j,i}$) des Punktes ($p_i$) ist,
   b) für jeden Punkt ($p_i$) wird mindestens ein Skalierungsfaktor $a_{ji}$ bestimmt, für den gilt:

   $$a_{ji}=[\log M_{ji}(d_2) - \log M_{ji}(d_1)]/[\log d_2 - \log d_1],$$

   c) es wird eine Vielzahl von Fenstern der Größe k bestimmt, die jeweils einen Unterbereich der Punkteverteilung umfassen,
   d) für die Vielzahl von Fenstern wird für jeden Skalierungsfaktor $a_{ji}$ entsprechend eine Vielzahl von Wahrscheinlichkeitsdichten $P_1(a_{ji})$ bestimmt,
   e) es werden ein Mittelwert und/oder eine Standardabweichung jeder Wahrscheinlichkeitsdichte gebildet, und
   f) das Auftreten eines Targetmusters wird erfaßt, falls eine Wahrscheinlichkeitsdichte $P_2$ der Mittelwerte und/oder Standardabweichungen von vorbestimmten Texturvergleichs

   werten abweicht.

2. Verfahren gemäß Anspruch 1, bei dem die erfaßten Targetmuster gemäß den folgenden Schritten lokalisiert werden:

   g) es werden Filterbereiche um einen Referenz-Skalierungsfaktor $a*_{ji}$ einer vorbestimmten Vergleichstextur definiert, und
   h) es werden alle Punkte ($p_i$) erfaßt, die einen Skalierungsfaktor $a_{ji}$ aufweisen, der in einem der Filterbereiche liegt.

3. Verfahren gemäß Anspruch 1 oder 2, bei dem jede Punktezahl $M_{ji}(d_2)$ und $M_{ji}(d_1)$ jeweils zwei Teilzahlen $M^+_{ji}(d_2)$, $M^-_{ji}(d_2)$, $M^+_{ji}(d_1)$ und $M^-_{ji}(d_1)$ umfaßt, die jeweils alle Punkte umfassen, deren j-te Koordinate in das Intervall der Breite d jeweils oberhalb (+) oder unterhalb (-) der Koordinate ($x_{n,i}$) fallen und bei dem die Schritte b) bis h) für jede der Teilzahlen durchgeführt werden.

4. Verfahren zur Erfassung von Targetmustern in einer Textur, mit der ein Systemzustand als Verteilung von Punkten ($p_i$) in einem n-dimensionalen Raum darstellbar ist, umfassend die Schritte:

   a) für jeden Punkt ($p_i$) mit den Koordinaten ($x_{1,i} \cdots x_{n,i}$) wird mindestens eine Punktzahl $M_{ji}(d_2)$, die jeweils alle Punkte umfaßt, deren j-te Koordinate in ein Intervall [$x_{j,i}+d_2, x_{j,i}-d_2$] fallen, und mindestens eine Punktzahl $M_{ji}(d_1)$ ermittelt, deren j-te Koordinate in ein Intervall [$x_{j,i}+d_1, x_{j,i}-d_1$] fallen, wobei $d = d_2-d_1$ die Breite eines vorbestimmten Intervalls jeweils oberhalb und unterhalb der Koordinate ($x_{j,i}$) des Punktes ($p_i$) ist,
   b) für jeden Punkt ($p_i$) wird mindestens ein Skalierungsfaktor $a_{ji}$ bestimmt, für den gilt:

   $$a_{ji}=[\log M_{ji}(d_2) - \log M_{ji}(d_1)]/[\log d_2 - \log d_1],$$

c) für jeden Skalierungsfaktor $a_{ji}$ wird eine Wahrscheinlichkeitsdichte $P_1$ $(a_{ji})$ bestimmt,

d) die Wahrscheinlichkeitsdichte $P_1(a_{ji})$ werden mit mindestens einer Bezugsverteilung eines targetmusterfreien Vergleichssystems verglichen,

e) falls die Differenz zwischen den Wahrscheinlichkeitsdichten $P_1$ und der Bezugsverteilung einen vorbestimmten Schwellwert überschreitet, wird das Auftreten eines Targetmusters erfaßt.

5. Verfahren gemäß Anspruch 4, bei dem jede Punktezahl $M_{ji}(d_2)$ und $M_{ji}(d_1)$ jeweils zwei Teilzahlen $M^+_{ji}(d_2)$, $M^-_{ji}(d_2)$, $M^+_{ji}(d_1)$ und $M^-_{ji}(d_1)$ umfaßt, die jeweils alle Punkte umfassen, deren j-te Koordinate in das Intervall der Breite d jeweils oberhalb (+) oder unterhalb (-) der Koordinate $(x_{n,i})$ fallen und bei dem die Schritte b) bis h) für jede der Teilzahlen durchgeführt werden.

6. Vorrichtung zur Durchführung eines Verfahrens zur Erfassung von Targetmustern in einer Textur, mit der ein Systemzustand als Punkteverteilung in einem n-dimensionalen Raum darstellbar ist, die umfaßt:

   Mittel zur Messung der Merkmale des Systemzustands und zur Bildung des n-dimensionalen Zustandsraums, Mittel zur Abtastung der ermittelten Punkte im Zustandsraum, Mittel zur Zählung von Punkten in vorbestimmte Umgebungen untersuchter Punkte, Mittel zur Erfassung von Skalierungsfaktoren, Mittel zur statistischen Bearbeitung der Skalierungsfaktoren und Mittel zur Registrierung bzw. Signalisierung vorbestimmter Strukturmerkmale.

7. Vorrichtung gemäß Anspruch 8, die Mittel zur Auslösung von Systemzuständen durch Zuführung von mechanischer Energie oder von Strahlungsenergie umfaßt.

8. Verwendung eines Verfahrens gemäß den Ansprüchen 1 bis 5 zur Bearbeitung von:

   - Bildern medizinischer oder biologischer Objekte,
   - Bildern von Werkstoffoberflächen, und
   - Zeitmustern dynamischer Systeme.

FIG. 1

FIG. 2

FIG. 3

1. Erfassung

Auszählung der Massenprojektionen

Bestimmung der
Skalierungsfaktoren $a_x$, $a_y$

Definition und Anordnung der
Fenster (k)

Bestimmung der Wahrscheinlichkeitsdichten $P_1(a_{x,y})$ für alle Fenster

Bestimmung der Mittelwerte $<|a|>$
und Standardabweichungen $\sigma_{|a|}$ von $P_1$

Bestimmung der Wahrscheinlich-
keitsdichten $P_2(<|a|>, \sigma_{|a|})$

Ermittlung des $P_2$-Verläufe des
Textur-Hintergrundes

Erfassung des Auftretens von $P_2$-
Verläufen, die vom Hintergrund
abweichend

2. Lokalisierung

Pixel-Filterung
$|a| \in [a^* - c \cdot \sigma_{|a|,c}, \ a^* + c \cdot \sigma_{|a|,c}]$

3. Verarbeitung
(z. B. Registrierung, Signalisierung,
Orientierungsbestimmung, Auslösung
von Systemreaktionen)

Fig. 4

FIG. 5

a)

b)

c)

d)

FIG. 6

FIG. 7

a)

b)

c)

d)

e)

f)

FIG. 8

---

| 1. Erfassung |
| :--- |

| Auszählung der Massen-<br>projektionen |
| :--- |

| Bestimmung der<br>Skalierungsfaktoren $a_x$, $a_y$ |
| :--- |

| Definition und Anordnung der<br>Fenster (k) |
| :--- |

| Bestimmung der Wahrscheinlich-<br>keitsdichten $P_i(a_{x,y})$ für alle Fenster |
| :--- |

| Vergleich mit Bezugsverteilung<br>des Hintergrundes durch Differenz-<br>bildung |
| :--- |

| Erfassung eines Targetmusters, falls<br>Schwellwert überschritten |
| :--- |

| 2. Verarbeitung<br>(z. B. Registrierung, Signalisierung,<br>Orientierungsbestimmung, Auslösung<br>von Systemreaktionen) |
| :--- |

Fig. 9